# EUROPÄISCHE PATENTSCHRIFT

(11) **EP 3 951 310 B1**
(45) Veröffentlichungstag und Bekanntmachung des Hinweises auf die Patenterteilung: **06.07.2022**
(21) Anmeldenummer: 21184947.6
(22) Anmeldetag: 12.07.2021
(51) Int. Cl.: G01B 5/00, G01B 11/02, G01S 17/48, G01S 7/481, G01V 8/12

(54) **OPTOELEKTRONISCHER SENSOR, INSBESONDERE TRIANGULATIONS-LICHTTASTER**
OPTOELECTRONIC SENSOR, ESPECIALLY TRIANGULATION LIGHT SENSOR
CAPTEUR OPTOÉLECTRONIQUE, EN PARTICULIER CAPTEUR OPTIQUE À TRIANGULATION

(30) Priorität: 04.08.2020 DE 102020120564
(43) Veröffentlichungstag der Anmeldung: 09.02.2022
(73) Patentinhaber: SICK AG, 79183 Waldkirch (DE)
(72) Erfinder: Dr. Hörsch, Ingolf, 79102 Freiburg (DE); Jägle, Stefan, 79211 Denzlingen (DE); Galvin A., Loh, 65062 Singapur (SG)

(56) Entgegenhaltungen:
- EP-A1- 0 801 315
- JP-U- H0 643 610
- US-A1- 2005 085 838

## Beschreibung

Die Erfindung betrifft einen optoelektronischer Sensor mit einer optomechanischen Anordnung zum Aussenden, Empfangen oder Umlenken von Lichtstrahlen mit einer Verstellmechanik zum Verstellen der optischen Anordnung, wobei die Verstellmechanik ein erstes Verstellelement, das mit einem zweiten Verstellelement zusammenwirkt, aufweist, wobei durch Drehen des ersten Verstellelements eine relative Verschiebung der beiden Verstellelemente zueinander erfolgt. Optoelektronische Sensoren, mit einer optomechanischen Anordnung, die verstellt werden muss, sind beispielsweise Triangulationslichttaster. In Triangulationslichttastern muss in der Regel ein Schaltabstand eingestellt und justiert werden, was unter anderem dadurch erfolgen kann, dass die Empfangslinse verstellt wird. Wenn der Schaltabstand nahe an Triangulationslichttastern liegt, ist der Verstellweg für die Empfangslinse größer, als wenn der Schaltabstand in der Ferne liegt. Es werden also für ein und dieselbe optomechanische Anordnung (Empfangslinse) unterschiedlich empfindliche Einstellmöglichkeiten (grob oder fein) benötigt. Das ist nur sehr aufwändig zu bewerkstelligen.

EP 0 801 315 A1 offenbart einen optoelektronischen Sensor mit einer Verstellmechanik zum Verstellen einer drehbaren Empfangsoptik. Die Verstellmechanik weist ein Gewinde und einen in das Gewinde eingreifenden Mitnehmer zur Verstellung der Empfangsoptik auf, wobei durch Drehen des Gewindes eine relative Drehung der Empfangsoptik stattfindet.

Aus der WO2006/057028 A1 ist eine Anordnung bekannt, bei der zur Verstellung einer optischen Komponente ein Verstellmechanismus vorgesehen ist, bei der ein Verstellelement ein Außen- und ein Innengewinde mit unterschiedlichen Gewindesteigungen hat. Das Außengewinde ist in eine Halterung eingeschraubt. In das Innengewinde ist das eigentlich zu verschiebende Element eingeschraubt. Mit dieser Anordnung kann das zu verschiebende Element verstellt werden, wobei der gesamte Verstellweg die Summe der Verstellwege durch die beiden Gewinde ist.

Ausgehend davon ist es Aufgabe der Erfindung, einen optoelektronischen Sensor bereitzustellen mit einer einfachen und praktikablen Lösung für ein Verstellelement mit Grobverstellung und Feinverstellung.

Diese Aufgabe wird gelöst durch einen Sensor mit den Merkmalen des Anspruchs 1.

Ein erfindungsgemäßer optoelektronischer Sensor weist eine optomechanische Anordnung zum Aussenden, Empfangen oder Umlenken von Lichtstrahlen auf, sowie eine Verstellmechanik zum Verstellen der optomechanischen Anordnung, wobei die Verstellmechanik ein erstes Verstellelement, das mit einem zweiten Verstellelement zusammenwirkt, aufweist, wobei durch Drehen des ersten Verstellelements eine relative Verschiebung der beiden Verstellelemente zueinander und damit ein Verstellen der optomechanischen Anordnung erfolgt. Erfindungsgemäß weist das erste Verstellelement ein erstes Gewinde mit einer ersten Steigung und ein zweites Gewinde mit anderer Steigung auf, wobei das zweite Gewinde auf gleicher Achse wie das erste Gewinde liegt, so dass das erste Verstellelement nach Art einer Gewindestange mit verschiedenen Gewinden ausgebildet ist und erstes und zweites Gewinde auf der Achse in Verschieberichtung hintereinander liegen. Fernerweist das zweite Verstellelement einen Mitnehmer auf, der zur Grobverstellung der optomechanischen Anordnung in das Gewinde mit größerer Steigung eingreift und zur Feinverstellung in das Gewinde mit kleinerer Steigung eingreift.

Dadurch, dass das erste Verstellelement zwei Gewinde auf gleicher Achse aufweist, ist eine einfache und besonders einfach zu bedienende Anordnung gegeben, um sowohl eine Grobverstellung (über das Gewinde mit größerer Steigung) als auch eine Feinverstellung (über das Gewinde mit geringerer Steigung) bereitzustellen. Grob- und Feinverstellung erfolgen durch Drehen von ein und demselben ersten Verstellelement.

Bevorzugt ist der Mitnehmer über den gesamten Verstellweg der Verstellmechanik mit einem der Gewinde in Eingriff. Dadurch ist gewährleistet, dass die beiden Verstellelemente zueinander eine definierte Position einnehmen, so dass die Verstellelemente möglichst spielfrei positioniert sind.

Besonders kritisch ist der Übergang von Grob- zu Feinverstellung. Dieser sollte so erfolgen, dass das zu verstellende Element nicht sprunghaft verstellt wird, sondern bei derVerstellung eine stetig monotone Bewegung ausführt. Dies ist in Weiterbildung der Erfindung dadurch gewährleistet, dass der Mitnehmer nur in einen einzigen Gewindegang des ersten oder zweiten Gewindes eingreift, wobei die beiden Gewinde mit den unterschiedlichen Steigungen nahtlos ineinander übergehen. Vorzugsweise geht dabei auch die Steigung des ersten Gewindes kontinuierlich, also stetig und monoton, in die Steigung des zweiten Gewindes über. Dann kann nämlich das Gewinde aus einer echten Spiralschnecke mit kontinuierlich veränderter Steigung ausgebildet sein, d.h. "unendlich viele" verschiedene Gewinde. Dies ist vorteilhaft, um die Tastweiteneinstellung des Sensors zu linearisieren, also eine Proportionalität zwischen eingestellter Tastweite und Rotation des Bedienelements zu erhalten.

In einer anderen Ausführungsform der Erfindung greift der Mitnehmer nicht nur in einen Gewindegang ein, sondern weist ein erstes Innengewinde mit der ersten Steigung zur Aufnahme des ersten, als Außengewinde ausgeführten Gewindes auf und ein zweites Innengewinde mit der zweiten Steigung zur Aufnahme des zweiten, als Außengewinde ausgeführten Gewindes auf, wobei das zweite Innengewinde auf gleicher Achse wie das erste liegt. Dadurch ist zwar eine mechanisch stabilere Verbindung von erstem und zweitem Verstellelement gegeben, aber der Übergang von Grob- zur Feineinstellung, also der Übergang, wenn die ersten Gewinde außer Eingriff kommen und die zweiten Gewinde in Eingriff gelangen, ist problematischer.

In einfacher Weise kann dies aber dadurch gelöst werden, dass die Außengewinde einen axialen Abstand zueinander haben, der der axialen Gesamtlänge der beiden Innengewinde entspricht. Dann schraubt sich nämlich das zweite Außengewinde in das zweite Innengewinde, wenn die ersten Gewinde sich voneinander lösen.

Vorteilhafterweise haben dann die ersten Gewinde einen kleineren Durchmesser als die zweiten Gewinde.

Um mechanische Toleranzen aufzufangen oder ein Überrasten an den Endpositionen der beiden Gewinde zu ermöglichen, ist in Weiterbildung dieser Ausführungsform vorgesehen, dass der Mitnehmer zwei gegenüberliegende Backen aufweist, wobei jede Backe einen Teil des ersten und einen Teil des zweiten Innengewindes aufweist, so dass das erste Verstellelement zwischen die Backen mit seinen Außengewinden eingreifen kann. Beim Übergang von Grob- zur Feinverstellung haben dann die Backen die Möglichkeit, ein wenig nachzugeben.

In Weiterbildung der Erfindung sind mehrere Paare von erstem und zweiten Gewinde vorgesehen, wobei das zweite Verstellelement jeweils einen Mitnehmerfürje ein Paar Gewinde aufweist. Dadurch ergibt sich eine erheblich bessere Führung der Verstellelement zueinander. Zum Beispiel kann ein Verkannten auf diese Weise verhindert werden.

Vorteilhafterweise ist das erste Verstellelement von Hand bedienbar.

Dabei ist es sinnvoll, dass das erste Verstellelement über ein untersetztes Getriebe bedienbar ist. Eine Bedienung über ein Getriebe hat den Vorteil, dass dadurch eine mechanische Entkopplung gegeben ist, so dass durch die Bedienung axial ausgeübter Druck nicht auf das Verstellelement wirkt und somit der Druck keine ungewollte Verstellung bewirken kann. Andererseits wirkt eine mögliche axiale Rückstellkraft vom ersten Verstellelement nicht zurück auf den Drehknopf, was vorteilhaft ist, denn dieser ist in der Regel mit einem O-Ring an einem Gehäuse gedichtet, eine Rückwirkung könnte die Dichtwirkung beeinträchtigen. Ein weiterer Vorteil ist, dass die Untersetzung eine gröbere Ausführung der Gewinde mit tieferem Eingriff für den Mitnehmer erlaubt, sodass eine robustere Ausführung gegenüber Schwingung und mechanischem Schock gegeben ist.

In Weiterbildung der Erfindung ist das erste Verstellelement axial ortsfest in einem Sensorgehäuse angeordnet und die optomechanische Anordnung an das zweite Verstellelement angekoppelt, das axial beweglich gelagert ist, um eine Verstellung der optischen Anordnung relativ zum Sensorgehäuse zu bewirken.

Wenn das erste Verstellelement ein drittes Gewinde aufweist, wobei die Steigung des dritten Gewindes eine andere ist als die der ersten und zweiten Gewinde, gibt es neben einer Grob- und einer Feinverstellung eine weitere Verstellmöglichkeit mit anderer Steigung.

Bevorzugt wird die Erfindung bei einem Triangulations-Lichttaster eingesetzt. Die optomechanische Anordnung ist dann durch eine Empfangsoptik gebildet. Mittels der Erfindung lässt sich dann die Empfangsoptik, je nachdem ob der Schaltabstand in der Ferne oder in der Nähe liegt, in gewünschter Weise und mit der notwendigen Feinheit einstellen. In einem Triangulations-Lichttaster sind die Sendelichtstrahlen in den Überwachungsbereich gerichtet und der Lichtempfänger umfasst mehrere Empfangsbereiche, die jeweils Empfangssignale ausgeben, wobei die Empfangsbereiche unterschiedlichen Objektabständen zugeordnet sind und zu diesem Zweck derart angeordnet sind, dass je nach Abstand des zu erfassenden Objekts vom Triangulationsprinzip-Lichttaster unterschiedliche Empfangsbereiche von remittiertem Empfangslicht beaufschlagt werden.

Vorteilhafterweise ist eine Empfangsfläche des Lichtempfängers in einen Nahbereich und einen Fernbereich unterteilt und das Gewinde mit größerer Steigung ist einer Verstellung im Nahbereich und die Gewinde mit kleinerer Steigung einer Verstellung im Fernbereich zugeordnet.

Weiter könnte es in einer Ausführungsform sinnvoll sein, mehrere der erfindungsgemäßen Verstellmechaniken vorzusehen, beispielsweise ein optisches Element (zum Beispiel eine Empfangsoptik) doppelt zu führen. Durch die doppelte Führung wird die Geradheit (Linearität) der Verstellung gewährleistet und ein Verkanten verhindert.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung eines Lichttasters nach dem Triangulationsprinzip;
- Fig. 2: ein erstes Ausführungsbeispiel einer Verstellmechanik;
- Fig. 3: ein zweites Ausführungsbeispiel der Verstellmechanik;
- Fig. 4: Teile eines dritten Ausführungsbeispiels der Verstellmechanik;
- Fig. 5: ein zweites Verstellelement der Verstellmechanik aus Fig. 4.

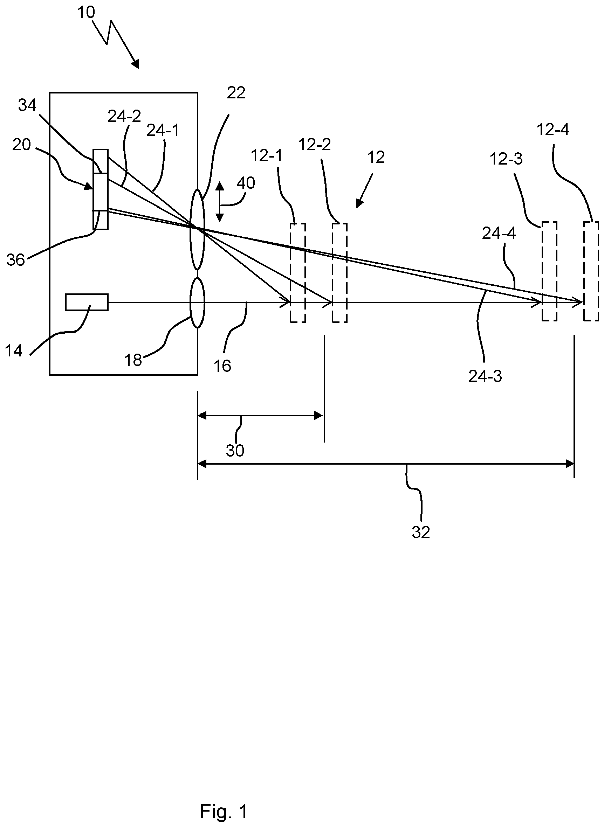

In Fig. 1 ist ein Triangulations-Lichttaster 10 (im Folgenden auch einfach Lichttaster genannt) und seine Funktionsweise schematisch dargestellt. TriangulationsLichttaster dieser Art sind eine Art Distanzmesser, die feststellen können, ob ein Objekt 12 sich innerhalb oder außerhalb eines Schaltabstands befindet.

Der Lichttaster weist eine Lichtquelle 14 auf, die einen Sendelichtstrahl 16 in einen Überwachungsbereich 18 aussendet. Der Sendelichtstrahl 16 wird in der Regel durch eine Sendeoptik 18 gebündelt und fokussiert ausgesendet. Der Sendelichtstrahl 16 trifft auf ein Objekt 12, das in Fig. 1 in vier verschiedenen Abständen vom Lichttaster 10 gestrichelt dargestellt ist. Das Objekt 12 ist in diesen Positionen mit den Bezugsziffern 12-1, 12-2, 12-3, 12-4 bezeichnet.

Weiter weist der Lichttaster 10 einen ortsauflösenden Empfänger 20 auf, der in diesem Ausführungsbeispiel als eine Anzahl aus in einer Zeilenrichtung angeordneten Fotodioden besteht. Die Zeilenrichtung ist die sogenannte Triangulationsrichtung und liegt in der Zeichenebene und auf der Verbindungslinie zwischen Lichtquelle 14 und Empfänger 20. Dem Empfänger 20 ist eine Empfangsoptik 22 vorgeordnet, die in diesem Ausführungsbeispiel als einfache Empfangslinse dargestellt ist.

In dieser Anordnung werden die jeweiligen Reflexionen des Sendelichtstrahl 16 an dem Objekt 12 entsprechend den verschiedenen Positionen 12-1, 12-2, 12-3, 12-4 auf dem Empfänger 20 abgebildet. Für die Positionen 12-1, 12-2, 12-3, 12-4 ist dies durch jeweilige Empfangslichtstrahlen 24-1, 24-2, 24-3, 24-4 dargestellt.

Weiter sind in Figur 1 zwei Schaltabstände 30 und 32 dargestellt, von denen der Schaltabstand 30 nahe am Lichttaster 10 liegt und der Schaltabstand 32 weiter entfernt. In der Regel wird ein einziger bestimmter Schaltabstand am Lichttaster 10 eingestellt, um im späteren Arbeitsbetrieb detektieren zu können, ob das detektierte Objekt 12 innerhalb (das bezeichnet man dann als Nahbereich) oder außerhalb (Fernbereich) des Schaltabstands liegt, um dementsprechend ein Schaltsignal auszugeben. Zu dem jeweils gewählten Schaltabstand 30 oder 32 gehört nach dem Triangulationsprinzip ein Trennsteg auf dem in Triangulationsrichtung ortsauflösenden Empfänger 20. Die Lage dieses Trennsteges ist in Figur 1 mit dem Bezugszeichen 34 für den Schaltabstand 30 bzw. mit 36 für den Schaltabstand 32 gekennzeichnet.

Die Lage des mit dem Schaltabstand korrespondierenden Trennsteges ist definiert durch den Schaltabstand, die Empfangsoptik 22 und der Position des Empfängers 20. Da die Position des Empfängers 20 in der Regel in einem Gehäuse des Lichttasters 10 festgelegt ist, kann der Schaltabstand 30 bzw. 32 also durch die Wahl des Trennsteges 34 bzw. 36 festgelegt werden. Für die Wahl des Trennsteges 34 bzw. 36 gibt es einerseits die Möglichkeit, diesen auf dem Empfänger 20 definieren zu können, zum Beispiel wenn der Empfänger 20 als eine Zeile mit einer Vielzahl von Fotodioden ausgebildet ist, die einzelnen auslesbar sind. Auf diese Weise können die Fotodioden auf der einen Seite des Trennsteges 34 bzw. 36 dem Nahbereich und die anderen dem Fernbereich zugeordnet werden. Häufig wird aber auch ein einfacherer Empfänger 20 eingesetzt, der beispielsweise lediglich aus zwei unmittelbar nebeneinander angeordneten Einzelempfängern besteht. Dann lässt sich der Schaltabstand 30 bzw. 32 durch Verschieben der Empfangsoptik 22 festlegen. Eine solche Einstellmöglichkeit ist durch den Doppelpfeil 40 angedeutet. Durch das Verschieben der Empfangsoptik 22 wird nämlich der Schwerpunkt des auftreffenden Lichts auf den Empfänger 20 verändert und kann deshalb so gelegt werden, dass genau im Schaltabstand 30 bzw. 32 gleich viel Licht auf Nah- wie Fernbereich fällt.

Alternativ könnte in einer nicht dargestellten Ausführungsform gleichermaßen anstatt der Empfängerlinse mit der vorstehend beschriebenen Verstellmimik die Einzelempfänger (z.B. Fotodioden) oder die gesamte Fotodioden-Zeile selbst verschoben werden (die Empfängerlinse bliebe dann ortsfest).

Wie aus Figur 1 zu erkennen ist, ist eine Einstellung des kleineren Schaltabstands 30 erheblich weniger tolerant gegenüber Abweichungen als die Einstellung der Schaltabstands 32, der erheblich weiter entfernt liegt. Das liegt an dem Triangulationsprinzip, wie sich aus Figur 1 anhand der Empfangslichtstrahlen 24-1, 24-2 einerseits und 24-3, 24-4 andererseits sehr gut erkennen lässt. Im Nahbereich, also bei kleinen Schaltabständen, liegen die Schwerpunkte des Lichtempfangs der Reflektionen an den Objekten 12-1 und 12-2 erheblich weiter auseinander als im Fernbereich, bei Objekten 12-3 und 12-4, zwischen denen der gleiche relative Abstand besteht wie zwischen den Objekten 12-1 und 12-2. Wenn man den Schaltabstand 30 bzw. 32 also über eine Verstellung der Empfangsoptik 22 einstellen möchte, ist im Nahbereich lediglich eine gröbere Verstellung notwendig, im Fernbereich hingegen aber eine sehr feine Einstellung notwendig.

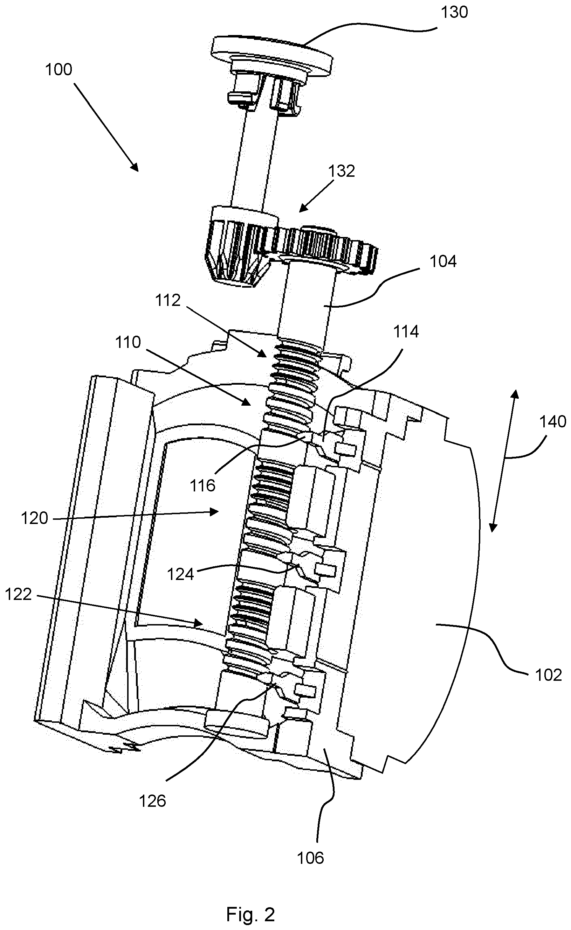

Die Erfindung betrifft jetzt im Kern die mechanische Ausbildung einer solchen Verstellmöglichkeit für eine optomechanische Anordnung, wie sie die Empfangsoptik 22 darstellt, die für den einen Bereich eine grobe und für den anderen Bereich eine feine Einstellung erlaubt. Im Weiteren wird eine Verstellmechanik 100 (Fig. 2 bis 5) anhand eines Lichttasters beschrieben, bei dem eine Empfangsoptik 102 verstellt werden soll. Es soll aber bemerkt werden, dass die Erfindung nicht nur zum linearen Verschieben einer Empfangsoptik eingesetzt werden kann, sondern auch für andere optomechanische Anordnungen und auch nicht nur für lineares Verschieben, sondern zum Beispiel Verkippen oder dergleichen.

Die erfindungsgemäße Verstellmechanik 100 zum Verstellen der Empfangsoptik 102 umfasst ein erstes Verstellelement 104, das mit einem zweiten Verstellelement 106 zusammenwirkt. In dem Ausführungsbeispiel nach Figur 2 ist das erste Verstellelement 104 in nicht näher dargestellter Weise in einem auch nicht dargestellten Gehäuse des Lichttasters drehbar, aber ansonsten ortsfest gelagert. Durch Drehen des ersten Verstellelements 104 erfolgt eine relative Verschiebung der beiden Verstellelemente 104 und 106 zueinander. In diesem Fall wird das zweite Verstellelement 106 linear in Richtung des Doppelpfeils 140 verschoben. Diese Verschiebung ist die zu erzielende Bewegung, um letztendlich den oben genannten Schaltabstand 30 bzw. 32 definiert einstellen zu können.

Das erste Verstellelement 104 weist ein erstes Gewinde 110 mit einer ersten Steigung und ein zweites Gewinde 112 mit anderer Steigung auf. Die Steigung des zweiten Gewindes 112 ist in diesem Ausführungsbeispiel feiner (kleiner) als die des ersten Gewindes 110. Beide Gewinde sind auf gleicher Achse angeordnet, so dass das erste Verstellelement 104 quasi wie eine Art Gewindestange mit verschiedenen Gewinden ausgebildet ist und das Verstellelement 104 in geeigneter Weise in dem Gehäuse gelagert ist. so dass erstes und zweites Gewinde auf der Achse in Verschieberichtung hintereinander liegen.

Das zweite Verstellelement 106 ist in dem Gehäuse linear verschiebbar in Richtung des Doppelpfeils 108 gelagert. Es bildet eine Art Schlitten, an dem die Empfangsoptik 102 festgelegt ist. Weiter weist das zweite Verstellelement 106 einen Mitnehmer 114 auf, der in nur einen Gewindegang des ersten bzw. zweiten Gewindes 110 bzw. 112 mit einer entsprechend ausgebildeten Spitze 116 eingreift.

Durch Drehen des ersten Verstellelements 104 wird der Mitnehmer 114 im jeweiligen Gewinde 110 bzw. 112 geführt, so dass diese Führung ein Verschieben des linear geführten, zweiten Verstellelements 106 bewirkt. Wenn der Mitnehmer 114 in das gröbere, erste Gewinde 110 eingreift, erfolgt eine Grobverstellung und wenn der Mitnehmer 114 in das feinere, zweite Gewinde 112 eingreift, erfolgt eine Feinverstellung. Dadurch, dass die beiden Gewinde auf der genannten Achse in Verschieberichtung 140 hintereinanderliegen, erfolgen die Feinverstellung und die Grobverstellung durch Drehen des einen Verstellelements 104 also nacheinander.

Wenn das zweite Gewinde 112 sich nahtlos an das erste Gewinde 110 anschließt, wie dies in Figur 2 dargestellt ist, geht die Grobverstellung stetig und monoton in die Feinverstellung über. Der Mitnehmer 114 ist dann über den gesamten Verstellweg der Verstellmechanik 100 mit einem der Gewinde 110 bzw. 112 in Eingriff.

Die beiden Gewinde 110 und 112 bilden ein zusammengehöriges Paar. Für eine bessere Führung der beiden Verstellelemente 104 und 106 zueinander ist bevorzugt vorgesehen, dass weitere Paare von erstem und zweiten Gewinde vorgesehen sind. In Figur 2 sind zwei weitere Paare 120 und 122 dargestellt, wobei das zweite Verstellelement 106 jeweils weitere Mitnehmer 124 bzw. 126 für je ein Paar Gewinde aufweist.

Um das erste Verstellelement 104 drehen zu können, ist ein Bedienelement 130 vorgesehen, das ebenfalls in dem Gehäuse drehbar gelagert ist. Das Bedienelement 130 ist mit dem ersten Verstellelement 104 über ein untersetztes Schneckenradgetriebe 132 verbunden. Eine Bedienung über das extra vorgesehene Bedienelement 130 und das Getriebe 132 hat zwei wesentliche Vorteile. Zum einen wird bei der Betätigung des Bedienelements 130 mit der Hand oder mit einem Schraubendreher vermieden, dass axialer Druck auf das Verstellelement 104 und damit letztendlich auf die Empfangsoptik 102 ausgeübt werden kann. Der weitere Vorteil ist, dass durch die Untersetzung eine feinere Einstellung möglich ist.

In einer nicht dargestellten Ausführungsform ist zusätzlich zu dem ersten und dem zweiten Gewinde ein weiteres Gewinde mit einer dritten Steigung vorgesehen, wodurch dann neben einer Grob- und einer Feinverstellung eine zwischen grob und fein liegende weitere Verstellmöglichkeit gegeben wäre.

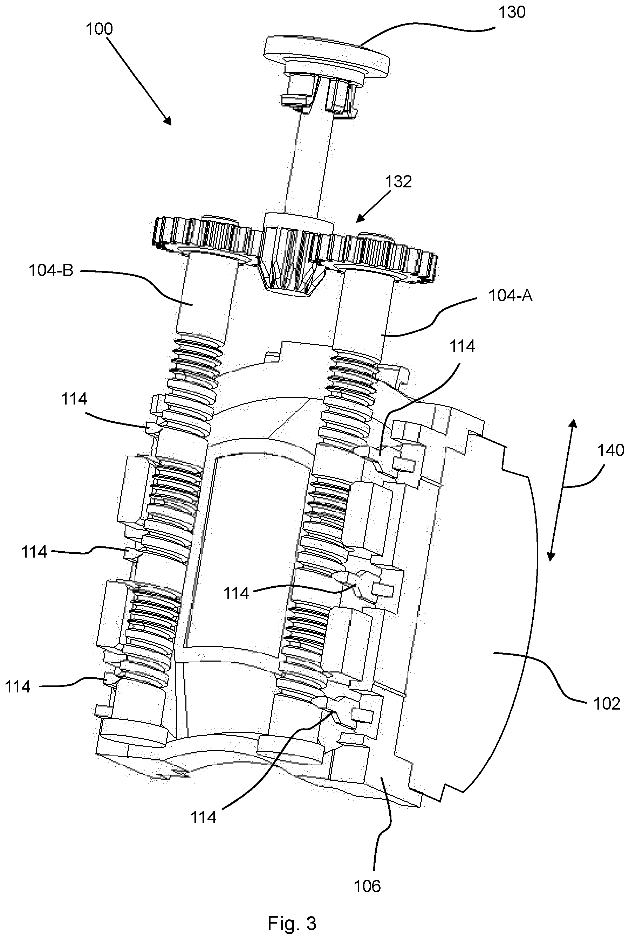

In einer in Figur 3 dargestellten Ausführungsform der Verstellmechanik 100 sind zwei erste Verstellelemente 104-A und 104-B vorgesehen und das zweite Verstellelement 106 weist eine entsprechende Anzahl Mitnehmer 114 auf.

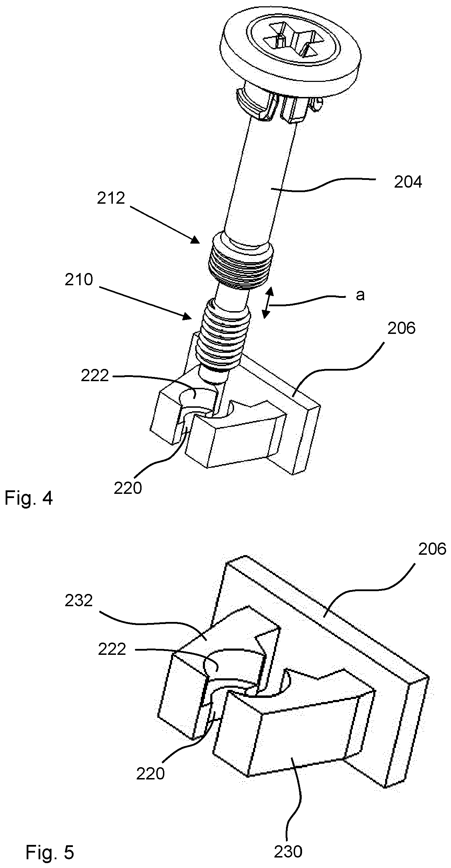

In den Figuren 4 und 5 sind Teile einer weiteren Ausführungsform dargestellt, in der das erste Verstellelement 204 und das zweite Verstellelement 206 etwas anders ausgebildet sind, wobei das Funktionsprinzip aber das gleiche ist.

Das erste Verstellelement 204 weist wiederum ein erstes Gewinde 210 und ein zweites Gewinde 212 mit den entsprechenden unterschiedlichen Steigungen auf, die in diesem Ausführungsbeispiel als Außengewinde ausgeführt sind. Die beiden Außengewinde 210 und 212 haben zueinander einen axialen Abstand a. Das erste Außengewinde 210 hat einen kleineren Durchmesser als das zweite Außengewinde 212. Das erste Verstellelement 206 ist also wiederum nach Art einer Gewindestange mit unterschiedlichen Gewinden ausgebildet.

Das zweite Verstellelement 206 dient jetzt zur Aufnahme des ersten Verstellelements 204. Dazu umfasst das zweite Verstellelement 206 ein erstes Innengewinde 220 mit der ersten Steigung zur Aufnahme des ersten Außengewindes 210 und ein zweites Innengewinde 222 mit der zweiten Steigung zur Aufnahme des zweiten Außengewindes 212 auf. Beide Innengewinde 220 und 222 liegen auf gleicher Achse. Das Innengewinde 220 hat ein dem Außendurchmesser des Außengewindes 210 entsprechenden Durchmesser und das Innengewinde 222 hat ein dem Durchmesser des Außengewindes 212 entsprechenden Durchmesser. Die einzelnen Gewindegänge der Innengewinde 220 und 222 sind in der schematischen Fig. 4 nicht dargestellt. Die Innengewinde 220 und 222 bilden hier die Mitnehmer 114 wie in der ersten bzw. zweiten Ausführungsform nach Figuren 2 bzw. 3, weil sie die gleiche Funktion haben wie die Mitnehmer 114.

Die Außengewinde 210 und 212 haben einen axialen Abstand zueinander, der der axialen Gesamtlänge der beiden Innengewinde 220 und 222 entspricht. Dann schraubt sich nämlich das zweite Außengewinde 212 in das zweite Innengewinde 222, wenn die ersten Gewinde 210 und 220 sich voneinander lösen.

Die Innengewinde 220 und 222 sind in zwei gegenüberliegende Backen 230 und 232 vorgesehen, wobei jede Backe einen Teil des ersten Innengewindes 220 und einen Teil des zweiten Innengewindes 222 aufweist, so dass das erste Verstellelement 204 zwischen die Backen 230 und 232 mit seinen Außengewinden 210 und 212 eingreifen kann. Beim Übergang von Grob- zur Feinverstellung haben dann die Backen die Möglichkeit, ein wenig nachzugeben, um mechanische Fertigungstoleranzen auszugleichen.

## Patentansprüche

1. Optoelektronischer Sensor mit einer optomechanischen Anordnung (22, 102,) zum Aussenden, Empfangen oder Umlenken von Lichtstrahlen (16, 24) mit einer Verstellmechanik (100) zum Verstellen der optomechanischen Anordnung (102), wobei die Verstellmechanik (100) ein erstes Verstellelement (104; 204), das mit einem zweiten Verstellelement (106; 206) zusammenwirkt, aufweist, wobei durch Drehen des ersten Verstellelements (104; 204) eine relative Verschiebung (40; 140) der beiden Verstellelemente (104, 106; 204, 206) zueinander erfolgt,
**dadurch gekennzeichnet,**
**dass** das erste Verstellelement (104; 204) ein erstes Gewinde (110; 210) mit einer ersten Steigung und ein zweites Gewinde (112; 212) mit anderer Steigung aufweist, wobei das zweite Gewinde (112; 212) auf gleicher Achse wie das erste Gewinde (110; 210) liegt, so dass das erste Verstellelement (104; 204) nach Art einer Gewindestange mit verschiedenen Gewinden ausgebildet ist und erstes und zweites Gewinde (110, 112; 210, 212) auf der Achse in Verschieberichtung (40; 140) hintereinander liegen,
und **dass** das zweite Verstellelement (106; 206) einen Mitnehmer (114; 220, 222) aufweist, der zur Grobverstellung der optomechanischen Anordnung (22, 102) in das Gewinde (110; 210) mit größerer Steigung eingreift und zur Feinverstellung in das Gewinde (112; 212) mit kleinerer Steigung eingreift.

2. Sensor nach Anspruch 1, **dadurch gekennzeichnet, dass** über den gesamten Verstellweg der Verstellmechanik der Mitnehmer mit einem der Gewinde in Eingriff ist.

3. Sensor nach Anspruch 1, **dadurch gekennzeichnet, dass** der Mitnehmer nur in einen einzigen Gewindegang des ersten oder zweiten Gewindes eingreift.

4. Sensor nach Anspruch 3, **dadurch gekennzeichnet, dass** die Steigung des ersten Gewindes kontinuierlich, also stetig und monoton, in die Steigung des zweiten Gewindes übergeht.

5. Sensor nach einem vorhergehenden Ansprüche 1 oder 2, **dadurch gekennzeichnet, dass** der Mitnehmer ein erstes Innengewinde mit der ersten Steigung zur Aufnahme des ersten, als Außengewinde ausgeführten Gewindes aufweist und ein zweites Innengewinde mit der zweiten Steigung aufweist zur Aufnahme des zweiten, als Außengewinde ausgeführten Gewindes aufweist, wobei das zweite Innengewinde auf gleicher Achse wie das erste liegt.

6. Sensor nach Anspruch 5, **dadurch gekennzeichnet, dass** die Außengewinde einen axialen Abstand zueinander haben, der der axialen Gesamtlänge der beiden Innengewinde entspricht.

7. Sensor nach einem der vorhergehenden Ansprüche 5 bis 6, **dadurch gekennzeichnet, dass** die ersten Gewinde einen kleineren Durchmesser haben als die zweiten Gewinde.

8. Sensor nach einem der vorhergehenden Ansprüche 5 bis 7, **dadurch gekennzeichnet, dass** der Mitnehmer zwei gegenüberliegende Backen aufweist, wobei jede Backe einen Teil des ersten und einen Teil des zweiten Innengewindes aufweist, so dass das erste Verstellelement zwischen die Backen mit seinen Außengewinden eingreifen kann.

9. Sensor nach einem der vorhergehenden Ansprüche, **dadurch gekennzeichnet, dass** mehrere Paare von erstem und zweiten Gewinde vorgesehen sind, wobei das zweite Verstellelement jeweils einen Mitnehmer für je ein Paar Gewinde aufweist.

10. Sensor nach einem der vorhergehenden Ansprüche, **dadurch gekennzeichnet, dass** das erste Verstellelement von Hand bedienbar ist.

11. Sensor nach Anspruch 10, **dadurch gekennzeichnet, dass** das erste Verstellelement über ein untersetztes Getriebe bedienbar ist.

12. Sensor nach einem der vorhergehenden Ansprüche, **dadurch gekennzeichnet, dass** das erste Verstellelement axial ortsfest in einem Sensorgehäuse angeordnet ist und die optomechanische Anordnung an das zweite Verstellelement angekoppelt ist, das axial beweglich gelagert ist, um eine Verstellung der optischen Anordnung relativ zum Sensorgehäuse zu bewirken.

13. Sensor nach einem der vorhergehenden Ansprüche, **dadurch gekennzeichnet, dass** das erste Verstellelement ein drittes Gewinde aufweist, wobei die Steigung des dritten Gewindes eine andere ist als die der ersten und zweiten Gewinde.

14. Sensor nach einem der vorhergehenden Ansprüche, **dadurch gekennzeichnet, dass** dieser als Triangulations-Lichttaster ausgebildet ist und die optomechanische Anordnung durch eine Empfangsoptik gebildet ist und die Sendelichtstrahlen in den Überwachungsbereich gerichtet sind und der Lichtempfänger mehrere Empfangsbereiche umfasst, die jeweils Empfangssignale ausgeben, wobei die Empfangsbereiche unterschiedlichen Objektabständen zugeordnet sind und zu diesem Zweck derart angeordnet sind, dass je nach Abstand des zu erfassenden Objekts vom TriangulationsLichttaster unterschiedliche Empfangsbereiche von remittiertem Empfangslicht beaufschlagt werden.

15. Sensor nach Anspruch 14, **dadurch gekennzeichnet, dass** eine Empfangsfläche des Lichtempfängers in einen Nahbereich und einen Fernbereich unterteilt ist und das Gewinde mit größerer Steigung einer Verstellung im Nahbereich und die Gewinde mit kleinerer Steigung einer Verstellung im Fernbereich zugeordnet sind.

## Claims

1. Optoelectronic sensor having an optomechanical arrangement (22, 102) for emitting, receiving or deflecting light beams (16, 24), having an adjustment mechanism (100) for adjusting the optomechanical arrangement (102), the adjustment mechanism (100) having a first adjustment element (104; 204) which cooperates with a second adjustment element (106; 206), wherein a relative displacement (40; 140) of the two adjustment elements (104, 106; 204, 206) with respect to one another is effected by rotating the first adjustment element (104; 204),
**characterised in that**
the first adjustment element (104; 204) has a first thread (110; 210) with a first pitch and a second thread (112; 212) with a different pitch, the second thread (112; 212) lying on the same axis as the first thread (110; 210), so that the first adjustment element (104; 204) is designed in the manner of a threaded rod with different threads and the first and second threads (110, 112; 210, 212) lie one behind the other on the axis in the displacement direction (40; 140),
and **in that** the second adjustment element (106; 206) has a driver (114; 220, 222) which engages in the thread (110; 210) with a larger pitch for coarse adjustment of the optomechanical arrangement (22, 102) and engages in the thread (112; 212) with a smaller pitch for fine adjustment.

2. Sensor according to claim 1, **characterised in that** the driver is engaged with one of the threads over the entire adjustment path of the adjustment mechanism.

3. Sensor according to claim 1, **characterised in that** the driver engages only in a single thread of the first or second thread.

4. Sensor according to claim 3, **characterised in that** the pitch of the first thread changes continuously, i.e. steadily and monotonically, into the pitch of the second thread.

5. Sensor according to a preceding claim 1 or 2, **characterised in that** the driver has a first internal thread with the first pitch for receiving the first thread designed as an external thread and has a second internal thread with the second pitch for receiving the second thread designed as an external thread, the second internal thread lying on the same axis as the first.

6. Sensor according to claim 5, **characterised in that** the external threads have an axial distance from each other which corresponds to the total axial length of the two internal threads.

7. A sensor according to any one of the preceding claims 5 to 6, **characterised in that** the first threads have a smaller diameter than the second threads.

8. A sensor according to any one of the preceding claims 5 to 7, **characterised in that** the driver has two opposing jaws, each jaw having a part of the first internal thread and a part of the second internal thread so that the first adjustment element can engage between the jaws with its external threads.

9. A sensor according to any one of the preceding claims, **characterised in that** a plurality of pairs of first and second threads are provided, wherein the second adjustment element comprises a respective driver for each pair of threads.

10. Sensor according to one of the preceding claims, **characterised in that** the first adjustment element is manually operable.

11. Sensor according to claim 10, **characterised in that** the first adjustment element is operable via a stepped-down gear.

12. A sensor according to any one of the preceding claims, **characterised in that** the first adjustment element is arranged axially stationary in a sensor housing and the optomechanical arrangement is coupled to the second adjustment element, which is axially movably mounted to effect an adjustment of the optical arrangement relative to the sensor housing.

13. A sensor according to any one of the preceding claims, **characterised in that** the first adjustment element has a third thread, the pitch of the third thread being different from that of the first and second threads.

14. Sensor according to one of the preceding claims, **characterised in that** this is designed as a triangulation light sensor and the optomechanical arrangement is formed by a receiving optical system and the transmitted light beams are directed into the monitoring area and the light receiver comprises a plurality of receiving areas which each output receiving signals, the receiving areas being assigned to different object distances and being arranged for this purpose in such a way that, depending on the distance of the object to be detected from the triangulation light sensor, different receiving areas are acted upon by remitted receiving light.

15. Sensor according to claim 14, **characterised in that** a receiving surface of the light receiver is divided into a near range and a far range and the thread with a larger pitch is assigned to an adjustment in the near range and the threads with a smaller pitch are assigned to an adjustment in the far range.

## Revendications

1. Capteur optoélectronique avec un dispositif optomécanique (22, 102) pour émettre, recevoir ou dévier des rayons lumineux (16, 24), avec un mécanisme de réglage (100) pour régler le dispositif optomécanique (102), le mécanisme de réglage (100) présentant un premier élément de réglage (104; 204) qui coopère avec un deuxième élément de réglage (106; 206), un déplacement relatif (40; 140) des deux éléments de réglage (104, 106; 204, 206) l'un par rapport à l'autre étant effectué par une rotation du premier élément de réglage (104; 204),
**caractérisé en ce que**
le premier élément de réglage (104; 204) présente un premier filetage (110; 210) avec un premier pas et un deuxième filetage (112; 212) avec un autre pas, le deuxième filetage (112; 212) se trouvant sur le même axe que le premier filetage (110; 210), de sorte que le premier élément de réglage (104; 204) est réalisé à la manière d'une tige filetée avec différents filetages et que le premier et le deuxième filetage (110, 112; 210, 212) se trouvent l'un derrière l'autre sur l'axe dans la direction de déplacement (40; 140),
et **en ce que** le deuxième élément de réglage (106; 206) présente un entraîneur (114; 220, 222) qui s'engage dans le filetage (110; 210) avec un pas plus grand pour le réglage grossier du dispositif optomécanique (22, 102) et s'engage dans le filetage (112; 212) avec un pas plus petit pour le réglage fin.

2. Capteur selon la revendication 1, **caractérisé en ce que** l'entraîneur est engagé avec l'un des filetages sur toute la trajectoire de réglage du mécanisme de réglage.

3. Capteur selon la revendication 1, **caractérisé en ce que** l'entraîneur ne s'engage que dans un seul filet du premier ou du deuxième filetage.

4. Capteur selon la revendication 3, **caractérisé en ce que** le pas du premier filetage évolue de manière continue, c'est-à-dire de manière régulière et monotone, vers le pas du second filetage.

5. Capteur selon l'une des revendications précédentes 1 ou 2, **caractérisé en ce que** l'entraîneur présente un premier filetage femelle avec le premier pas pour recevoir le premier filetage conçu comme un filetage mâle et présente un deuxième filetage femelle avec le deuxième pas pour recevoir le deuxième filetage conçu comme un filetage mâle, le deuxième filetage femelle se trouvant sur le même axe que le premier.

6. Capteur selon la revendication 5, **caractérisé en ce que** les filetages mâles ont une distance axiale l'un par rapport à l'autre qui correspond à la longueur axiale totale des deux filetages femelles.

7. Capteur selon l'une des revendications précédentes 5 à 6, **caractérisé en ce que** les premiers filetages ont un diamètre inférieur à celui des seconds filetages.

8. Capteur selon l'une des revendications précédentes 5 à 7, **caractérisé en ce que** l'entraîneur comporte deux mâchoires opposées, chaque mâchoire comportant une partie du premier filetage femelle et une partie du second filetage femelle de sorte que le premier élément de réglage peut s'engager entre les mâchoires avec ses filetages mâles.

9. Capteur selon l'une des revendications précédentes, **caractérisé en ce qu'**une pluralité de paires de premier et second filetages est prévue, dans lequel le second élément de réglage comprend un entraîneur respectif pour chaque paire de filetages.

10. Capteur selon l'une des revendications précédentes, **caractérisé en ce que** le premier élément de réglage est actionnable manuellement.

11. Capteur selon la revendication 10, **caractérisé en ce que** le premier élément de réglage est actionnable par l'intermédiaire d'un engrenage démultiplié.

12. Capteur selon l'une des revendications précédentes, **caractérisé en ce que** le premier élément de réglage est disposé de manière axialement fixe dans un boîtier de capteur et le dispositif optomécanique est couplé au second élément de réglage, qui est monté de manière axialement mobile pour effectuer un réglage du dispositif optique par rapport au boîtier de capteur.

13. Capteur selon l'une des revendications précédentes, **caractérisé en ce que** le premier élément de réglage comporte un troisième filetage, le pas du troisième filetage étant différent de celui du premier et du deuxième filetage.

14. Capteur selon l'une des revendications précédentes, **caractérisé en ce qu'**il est conçu comme un capteur de lumière à triangulation et le dispositif optomécanique est formé par une optique de réception et les rayons lumineux émis sont dirigés dans la zone de surveillance et le récepteur de lumière comprend une pluralité de zones de réception qui émettent chacune des signaux de réception, les zones de réception étant associées à différentes distances d'objet et étant disposées à cet effet de telle sorte que, selon la distance de l'objet à détecter par rapport au capteur de lumière à triangulation, différentes zones de réception sont sollicitées par la lumière de réception émise.

15. Capteur selon la revendication 14, **caractérisé en ce qu'**une surface de réception du récepteur de lumière est divisée en une plage proche et une plage éloignée et le filetage avec un pas plus grand est affecté à un réglage dans la plage proche et les filetages avec un pas plus petit sont affectés à un réglage dans la plage éloignée.
